# EUROPEAN PATENT APPLICATION

(11) **EP 2 581 425 A1**
(43) Date of publication of application: **17.04.2013**
(21) Application number: 11792491.0
(22) Date of filing: 08.06.2011
(51) Int. Cl.: C09J 7/02, B32B 27/00, B32B 27/30, C09J 133/04, C09J 153/00

(54) **ADHESIVE SHEET AND USE OF SAME**

(30) Priority: 11.06.2010 JP 2010133528
(71) Applicant: Nitto Denko Corporation, Ibaraki-shi, Osaka 567-8680 (JP)
(72) Inventor: TAKEDA, Kouhei, Ibaraki-shi Osaka 567-8680 (JP); HAYASHI, Keiji, Ibaraki-shi Osaka 567-8680 (JP)
(74) Representative: Grünecker, Kinkeldey, Stockmair & Schwanhäusser
(86) International application number: PCT/JP2011/063156
(87) International publication number: WO 2011/155534

(57) **Abstract**

Provided is a PSA sheet formed by co-extrusion of a PSA layer and layers (release layers) releasable from the PSA layer. A PSA sheet 10 comprising a PSA layer 12 comprising an acrylic block copolymer as its base polymer, an RA layer 14 laminated on a first face 12A of the PSA layer 12, an RB layer 16 laminated on a second face 12B of the PSA layer 12, with these layers having been co-extruded. Both the RA layer 14 and the RB layer 16 are releasable from the PSA layer 12.

## Description

### [Technical Field]

The present invention relates to a pressure-sensitive adhesive (PSA) sheet comprising a PSA layer comprising an acrylic block copolymer as its base polymer. The present application claims priority to Japanese Patent Application No. 2010-133528 filed on June 11th, 2010, and the entire contents of the application are incorporated in the present application as reference.

### [Background Art]

An acrylic polymer is preferred as a base polymer of PSA because it has excellent transparency and weatherability, and may exhibit diverse properties depending on its monomer composition and polymer structure. For example, there has been proposed a PSA prepared with an acrylic block copolymer as its base polymer, with the copolymer being made up with two or more connected blocks, each comprising an acrylic monomer as its primary monomer. Technical literatures relating to this type of PSA include Patent Documents 1 to 8. Patent Documents 9 and 10 are technical literatures relating to an acrylic block copolymer for use in a molding material, etc. Patent Document 11 is a technical literature relating to a multi-layered film constituted to have an acrylic block copolymer layer on one face of a crystalline resin layer, or to have an acrylic block copolymer layer adhesively integrated between two crystalline resin layers.

### [Citation List]

### [Patent Literatures]

Patent Document 1: Japanese Patent Application Publication No. 2001-234146
Patent Document 2: Japanese Patent Application Publication No. 2001-348553
Patent Document 3: Japanese Patent Application Publication No. H09-125019
Patent Document 4: Japanese Patent Application Publication No. 2005-307063
Patent Document 5: Japanese Patent Application Publication No. H11-323072
Patent Document 6: Japanese Patent Application Publication No. 2003-105300
Patent Document 7: Japanese Patent Application Publication No. 2009-102467
Patent Document 8: Japanese Patent Application Publication No. 2009-249541
Patent Document 9: Japanese Patent Application Publication No. 2002-97238
Patent Document 10: Japanese Patent Application Publication No. 2005-54065
Patent Document 11: Japanese Patent Application Publication No. 2009-125985
Patent Document 12: Japanese Patent Application Publication No. 2007-185781

### [Summary of Invention]

### [Technical Problem]

Patent Document 12 describes a surface protection film comprising a release layer (A) formed of a polyamide-based resin, a PSA layer (B) formed of a non-crystalline α-olefin-based polymer and a propylene-based polymer, and a substrate layer (C) formed of a thermoplastic resin that have been co-extruded in order of(A)(B)(C). It describes that a surface protection film in such a constitution is highly clean on the film's adhesive surface because the release layer is laminated by co-extrusion on the adhesive surface that will be adhered to an adherend and the adhesive surface is shut off from the air prior to use (paragraph 0011, etc., of Patent Document 12).

However, in a constitution with a PSA layer comprising an acrylic polymer as its base polymer, there has not yet been a practical PSA sheet comprising the said PSA layer and a release layer laminated by co-extrusion. In the constitution according to Patent Document 12, changing the composition of the PSA layer (B) to an acrylic block copolymer and co-extruding with this acrylic block copolymer the polyamide-based resin used to form the release layer (A) in Patent Document 12 will result in a laminate film where the polyamide-based resin layer does not function as a release liner for the acrylic block copolymer layer (PSA layer) (i.e., the polyamide-based resin layer cannot be adequately peeled off from the PSA layer).

An objective of the present invention is to provide a PSA sheet comprising a PSA layer and a layer (release layer) releasable from the PSA layer that have been co-extruded, wherein the PSA layer comprises an acrylic polymer as its base polymer.

### [Solution to Problem]

The present invention provides a PSA sheet comprising a PSA layer comprising an acrylic block copolymer as its base polymer, an RA layer that is laminated on a first face of the PSA layer and is releasable from the PSA layer, and an RB layer that is laminated on a second face of the PSA layer and is releasable from the PSA layer, with these layers having been co-extruded. Because the PSA layer comprises an acrylic block copolymer as its base polymer, it may be of excellent transparency, taking advantage of characteristics of an acrylic polymer. Both the RA layer (first release layer) and the RB layer (second release layer) can function as release liners for the PSA layer. Thus, with a PSA sheet of this construction, the RA layer and the RB layer can be removed from the PSA layer and both the faces (the first face an the second face) of the PSA layer can be used as adhesive surfaces (the first adhesive surface and the second adhesive surface) to adherends. In other words, the PSA layer can be used as an adhesively double-faced PSA film. In such an embodiment of the use, it is especially meaningful that the PSA layer has a composition that is able to exhibit high transparency. The first adhesive surface and the second adhesive surface of the PSA layer are protected respectively with the first and the second release layers that have been laminated by co-extrusion with the PSA layer in the process of molding of the PSA sheet. Since the PSA layer would not be exposed to the outside until these release layers are removed, both the adhesive layers of the PSA layer can be kept clean. Therefore, the good adhesive properties are more likely to be stored until its use and dust collection on the adhesive surfaces can be avoided, giving rise to good external quality as well. This is especially advantageous when the PSA layer is used as an adhesively double-faced PSA film.

The acrylic block copolymer as the base polymer of the PSA layer may be, for instance, a block copolymer comprising at least one acrylate block and at least one methacrylate block. An acrylic block copolymer having such a structure is suitable for combining high levels of extrudability and adhesive properties in the PSA layer.

The acrylic block copolymer may have a weight average molecular weight (Mw) of, for instance, 3 ×10⁴ to 30 × 10⁴ . An acrylic block copolymer having such a Mw is suitable for combining high levels of extrudability and adhesive properties in the PSA layer.

In the RA layer and the RB layer (the first release layer and the second release layer), at least the PSA-layer-side surfaces (release faces) are preferably constituted with release-surface-forming compositions, with each comprising a polyolefin as its primary component. A release layer of such a constitution may exhibit excellent releasability from the PSA layer. In a preferable embodiment, each of the RA layer and the RB layer is entirely formed of a composition comprising a polyolefin as its primary component. As the polyolefin, a polyethylene (PE) can be preferably used. Preferred examples of the polyolefin include a low-density polyethylene (LDPE) and a linear low-density polyethylene (LLDPE).

The PSA layer may have a thickness of, for instance, about 2 µm to 200 µm. The RA layer may have a thickness of, for instance, about 10 µm to 500 µm. The RB layer may have a thickness of, for instance, about 10 µm to 500 µm. The thickness of the RA layer and the thickness of the RB layer may be the same with or different from each other.

In a preferable embodiment of the PSA sheet disclosed herein, both when the RA layer is peeled off from the PSA layer and when the RB layer is peeled off from the PSA layer at a measurement temperature of 23 °C, a tensile speed of 10 m/min and a peel angle of 180°, both the release layers exhibit peel strengths of 5.0 N/20mm or smaller. A PSA sheet exhibiting such peel strengths is preferable because both the RA layer and the RB layer exhibit excellent releasability.

In another preferable embodiment ofthe PSA sheet disclosed herein, the PSA layer exhibits an adhesive strength relative to a stainless steel plate (SUS plate) of 1.0 N/20mm or greater at a measurement temperature of 23 °C, a tensile speed of 300 mm/min and a peel angle of 180°. This adhesive strength preferably has a value greater than the peel strength values of the RA layer and the RB layer measured when they are peeled from the PSA layer.

This description also provides a method for producing a PSA sheet having a laminated structure, comprising a PSA layer comprising an acrylic block copolymer as its base polymer, a RA layer that is laminated on a first face of the PSA layer and is releasable from the PSA layer, and a RB layer that is laminated on a second face of the PSA layer is releasable from the PSA layer. The method is characterized by co-extruding a PSA-layer-forming composition comprising the acrylic block polymer as its base polymer, an RA-layer-forming composition that forms the RA layer, and a RB-layer-forming composition that forms the RB layer. As the compositions for forming the RA layer and the RB layer, can be preferably used thermoplastic resin materials, with each comprising an polyolefin (e.g., a polyethylene) as its base polymer. Such a production method can be employed as the method for producing a PSA sheet disclosed herein.

A PSA sheet disclosed herein (which may be a PSA sheet produced by a method disclosed herein) comprises a PSA layer that may exhibit excellent transparency and can be used as an adhesively double-faced PSA film while it has a constitution that is suitable for keeping the adhesive surfaces of the PSA layer clean until use (until adhesion); and therefore, it is preferred as a PSA sheet used for adhering optical parts together.

### [Brief Description of Drawings]

Figure 1 shows a schematic diagram illustrating an example of constitutions of the PSA sheet according to the present invention.
Figure 2 shows a schematic diagram illustrating another example of constitutions of the PSA sheet according to the present invention.

### [Description of Embodiments]

Preferred embodiments of the present invention are described below. Matters necessary to practice this invention other than those specifically referred to in this description may be understood as design matters to a person of ordinary skill in the art based on the conventional art in the pertinent field. The present invention can be practiced based on the contents disclosed in this description and common technical knowledge in the subject field.

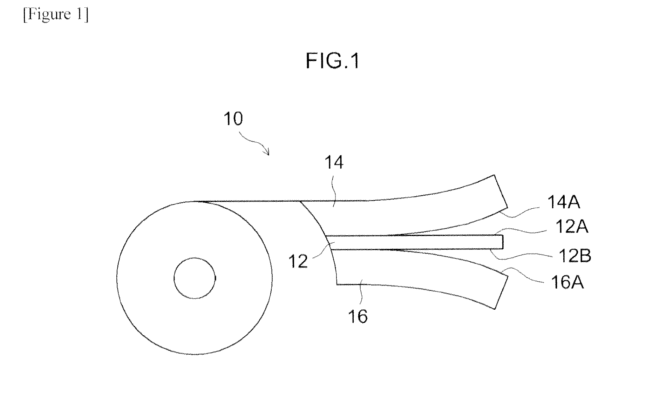

Figure 1 schematically shows an example of typical constitutions of the PSA sheet provided by the present invention. This PSA sheet 10 comprises a PSA layer 12 comprising an acrylic block copolymer as its base polymer, an RA layer (a first release layer) 14 laminated on a first face 12A of the PSA layer 12, and an RB layer (a second release layer) 16 laminated on a second face 12B of the PSA layer 12. The PSA sheet 10 is constituted as a multi-layered sheet wherein these PSA layer 12, RA layer 14, and RB layer 16 have been formed by co-extrusion. In the example shown in Figure 1, the PSA sheet 10 having a long tape shape is wound in a roll, with the RA layer 14 facing outward.

The PSA layer 12 is adhesive at 23 °C and preferably exhibits an adhesive strength of 1.0 N/20mm or greater (typically 1.0 N/20mm or greater up to 50.0 N/20mm) when measured by the method described later. The RA layer 14 and the RB layer 16 are releasable respectively from the first face 12A and the second face 12B of the PSA layer 12. By peeling off these RA layer 14 and RB layer 16 from the PSA layer 12 (more specifically, by peeling off the release face 14A of the RA layer 14 from the first face 12A of the PSA layer 12 and peeling off the release face 16A of the RB layer 16 from the second face 12B of the PSA layer 12), the PSA layer 12 can be used as an adhesively double-faced PSA film (a substrate-free PSA film).

The PSA layer in the art disclosed herein is formed of a PSA comprising an acrylic block copolymer as its base polymer (the primary component of polymer components, i.e., a component that accounts for 50 % by mass or greater). As such an acrylic block copolymer, one kind can be used solely, or two or more kinds can be used in combination, As the acrylic block copolymer, can be preferably used an acrylic block copolymer comprising at least one acrylate block (which hereinafter may be referred to as an Ac block) and at least one methacrylate block (which hereinafter may be referred to as an MAc block). For instance, preferable is a block copolymer having a structure in which Ac blocks and MAc blocks are positioned alternately. The total number of Ac blocks and MAc blocks is preferably 3 or larger (e.g., 3 to 5).

The Ac block typically comprises an acrylic acid ester as its primary monomer (i.e., a component that accounts for 50 % by mass or greater of the monomer units constituting the block). An acrylic acid ester may account for 75 % by mass or greater of the monomer units, or for 90 % by mass or greater. In a preferable embodiment, the monomer units constituting the Ac block (which may be at least one Ac block in an acrylic block copolymer comprising two or more Ac blocks, or all of its Ac blocks) contained in the acrylic block copolymer consist essentially of only one, two or more kinds (typically one kind) of acrylic acid ester. Alternatively, the Ac block may be a copolymer of an acrylic acid ester and another monomer (e.g., a methacrylic acid ester).

Examples of an acrylic acid ester constituting the Ac block include the following:
Aliphatic hydrocarbon esters of acrylic acid; for example, methyl acrylate, ethyl acrylate, n-propyl acrylate, isopropyl acrylate, n-butyl acrylate, isobutyl acrylate, tert-butyl acrylate, n-pentyl acrylate, n-hexyl acrylate, n-hepyl acrylate, n-octyl acrylate, 2-ethylhexyl acrylate, nonyl acrylate, isononyl acrylate, decyl acrylate, dodecyl acrylate, stearyl acrylate, etc.
Alicyclic hydrocarbon esters of acrylic acid; for example, cyclohexyl acrylate, isobornyl acrylate, etc.
Aromatic hydrocarbon esters of acrylic acid; for example, phenyl acrylate, benzyl acrylate, toluyl acrylate, etc.

Acrylic acid esters of alcohols containing ether bonds; for example, alkoxyalkyl acrylates such as 2-methoxyethyl acrylate, 2-methoxybutyl acrylate, etc.; acrylates containing epoxy groups such as glycidyl acrylate, methylglycidyl acrylate, etc.
Acrylates containing hydroxyl groups; for example, hydroxyalkyl acrylates such as 2-hydroxyethyl acrylate, 2-hydroxypropyl acrylate, 3-hydroxypropyl acrylate, 2-hydroxybutyl acrylate, 4-hydroxybutyl acrylate, etc.
Acrylates containing amino groups; for example, 2-aminoethyl acrylate, N,N-dimethylaminoethyl acrylate, N,N-dimethylaminopropyl acrylate, etc.
Acrylates containing alkoxysilyl groups; for example, 3-acryloxypropyltrimethoxysilane, 3-acryloxypropyltriethoxysilane, 3-acryloxypropylmethyldimethoxysilane, 3-acryloxypropylmethyldiethoxysilane, etc.
Alkylene oxide adducts of acrylic acid; for example, ethylene oxide adducts represented by formula: CF₂=CHCOO(CH₂CH₂O)ₙH (n is, for example, 1 to 10).

Of the monomers constituting the Ac block, 50 % by mass or greater (or 75% by mass or greater, or essentially all) is preferably a hydrocarbon ester of acrylic acid, which is particularly preferable to be an aliphatic hydrocarbon ester of acrylic acid (an alkyl acrylate). Examples of such an alkyl acrylate include alkyl acrylates having an alkyl group with 1 to 20 (preferably 1 to 14) carbon atoms.

In a preferable embodiment, of the monomers constituting the Ac block, 50 % by mass or greater (or 75 % by mass or greater, or essentially all) is an alkyl acrylate having an alkyl group with 1 to 10 carbon atoms. Especially preferable alkyl acrylates include n-butyl acrylate (BA), 2-ethylhexyl acrylate (2EHA), tert-butyl acrylate, and methyl acrylate. For example, the monomers preferably employed to constitute the Ac block may consist essentially of BA alone, 2EHA alone, both BA and 2EHA, or the like.

The MAc block typically comprises a methacrylic acid ester as its primary monomer (i.e., a component that accounts for 50 % by mass or greater of the monomer units constituting the block). Of the monomer units, a methacrylic acid ester may account for 75 % by mass or greater or for 90 % by mass or greater. In a preferable embodiment, the monomer units constituting the MAc block (which may be at least one MAc block in an acrylic block copolymer comprising two or more Ac blocks, or all of its Ac blocks) contained in the acrylic block copolymer consist essentially of only one, two or more kinds (typically one kind) of methacrylic acid ester. Alternatively, the MAc block may be a copolymer of a methacrylic acid ester and another monomer (e.g., an acrylic acid ester).

Examples of a methacrylic acid ester constituting the MAc block include the following:
Aliphatic hydrocarbon esters ofmethacrylic acid; for example, methyl methacrylate, ethyl methacrylate, n-propyl methacrylate, isopropyl methacrylate, n-butyl methacrylate, isobutyl methacrylate, tert-butyl methacrylate, n-pentyl methacrylate, n-hexyl methacrylate, n-heptyl methacrylate, n-octyl methacrylate, 2-ethylhexyl methacrylate, nonyl methacrylate, isononyl methacrylate, decyl methacrylate, dodecyl methacrylate, stearyl methacrylate, etc.
Alicyclic hydrocarbon esters of methacrylic acid; for example, cyclohexyl methacrylate, isobornyl methacrylate, etc.
Aromatic hydrocarbon esters of methacrylic acid; for example, phenyl methacrylate, toluyl methacrylate, benzyl methacrylate, etc.

Methacrylic acid esters of alcohols containing ether bonds; for example, alkoxyalkyl methacrylates such as 2-methoxyethyl methacrylate, 2-methoxybutyl methacrylate, etc.; and methacrylates containing epoxy groups such as glycidyl methacrylate, methylglycidyl methacrylate, etc.
Methacrylates containing hydroxyl groups; for example, hydroxyalkyl methacrylates such as 2-hydroxyethyl methacrylate, 2-hydroxypropyl methacrylate, 3-hydroxypropyl methacrylate, 2-hydroxybutyl methacrylate, 4-hydroxybutyl methacrylate, etc.
Methacrylates containing amino groups; for example, 2-aminoethyl methacrylate, N,N-dimethylaminoethyl methacrylate, N,N-dimethylaminopropyl methacrylate, etc.
Methacrylates containing alkoxysilyl groups; for example, 3-methacryloxypropyltrimethoxysilane, 3-methacryloxypropyltriethoxysilane, 3-methacryloxypropylmethyldimethoxysilane, 3-methacryloxypropylmethyldiethoxysilane, etc.
Alkylene oxide adducts of methacrylic acid; for example, ethylene oxide adducts represented by formula: CH₂=C(CH₃)COO(CH₂CH₂O)ₙH (n is, for example, 1 to 10).

Of the monomers constituting the MAc block, 50 % by mass or greater (or for 75 % by mass or greater, or essentially all) is preferably a hydrocarbon ester of methacrylic acid, with particularly preferable being an aliphatic hydrocarbon ester of methacrylic acid (an alkyl methacrylate). Examples of such an alkyl methacrylate include alkyl methacrylates having an alkyl group with 1 to 20 (preferably 1 to 14) carbon atoms.

In a preferable embodiment, of the monomers constituting the MAc block, 50 % by mass or greater (or 75 % by mass or greater, or essentially all) is an alkyl methacrylate having an alkyl group with 1 to 4 carbon atoms. Especially preferable alkyl methacrylates include methyl methacrylate (MMA) and ethyl methacrylate (EMA). For example, the monomers preferably employed may consist essentially of MMA alone, EMA alone, both MMA and EMA, or the like.

The acrylic block copolymer in the art disclosed herein may be a copolymer comprising A blocks and B blocks positioned alternatively such as type AB, type ABA, type ABAB, type ABABA, etc., with the A block having been formed of a polymer having a rigid structure with excellent cohesive strength and elasticity, and the B block having been formed of a polymer having a flexible structure with excellent viscosity. A PSA comprising as its base polymer an acrylic block copolymer having such a structure may form a PSA layer combining cohesive strength and elasticity as well as viscosity at high levels. A PSA having such a composition is preferable because it may be of excellent extrudability. Preferably used is an acrylic block copolymer having a structure in which A blocks are positioned at both terminals of a molecule (such as type ABA, type ABABA, etc.). An acrylic block copolymer having such a structure is preferable because it is likely to have a good balance of cohesiveness and thermoplasticity.

When the acrylic block copolymer comprises two or more A blocks, the compositions, molecular weights (polymerization degrees), structures, etc., of these A blocks can be the same with or different from each other. When the acrylic block copolymer comprises two or more B blocks, the same is true with the B blocks.

As the A block, can be preferably used an MAc block as those described above. As the B block, can be preferably used an Ac block as those described above. In a preferable embodiment, the acrylic block copolymer is a triblock copolymer having a structure of MAc-Ac-MAc (type ABA). For instance, can be preferably used a triblock copolymer with two MAc blocks having essentially identical monomer compositions.

The proportions of the mass of the MAc block (when two or more MAc blocks are contained, their total mass) and the mass of the Ac block (when two or more Ac blocks are contained, their total mass) contained in the acrylic block copolymer can be in a range such that the mass ratio MAc block/Ac block is 4/96 to 90/10 (usually 7/93 to 80/20, preferably 10/90 to 70/30, e.g., 20/80 to 50/50). When the proportion of the MAc block is excessively large, the adhesive strength may tend to be insufficient. When the proportion of the Ac block is excessively large, the cohesive strength or the elasticity may tend to be insufficient. As a result, the balance of the adhesive properties may be disrupted, or the releasability of the RA layer and the RB layer relative to the PSA layer may becomes insufficient.

As the acrylic block copolymer, in usual, can be suitably used an acrylic block copolymer having a weight average molecular weight (Mw) of about 3 × 10⁴ to 30 ×10⁴. The acrylic block copolymer has a Mw of preferably about 3.5 × 10⁴ to 25 × 10⁴, or more preferably about 4 × 10⁴ to 20 × 10⁴ (e.g., 5 × 10⁴ to 15 × 10⁴). When the Mw of the acrylic block copolymer is too small, the adhesive properties (e.g., cohesiveness) may tend to decrease, or the releasability ofthe RA layer and the RB layer may become insufficient. When the Mw is too large, the thermoplasticity of the acrylic block copolymer may become insufficient, whereby the co-extrudability of the PSA layer may tend to decrease.

The Mw of the acrylic block copolymer described here refers to a value based on standard polystyrene that is determined by gel permeation chromatography (GPC) with respect to a sample prepared by dissolving the copolymer in a suitable solvent (e.g., tetrahydrofuran (THF)). In particular, by carrying out GPC measurement under the conditions described later in Examples, can be determined the Mw of the acrylic block copolymer.

The Ac block may have a glass transition temperature (Tg) of, for example, -80 °C to -10 °C. Usually, a preferable Ac block has a Tg of -75 °C to -20 °C (e.g., -75 °C to -50 °C). The Tg of the MAc block may be, for example, 40 °C to 240 °C. Usually, a preferable MAc block has a Tg of 60 °C to 230 °C (e.g., 80 °C to 230 °C). The Tg's ofthe Ac block and the MAc block refer to the values determined from the FOX equation based on the Tg values of the homopolymers of the respective monomers constituting the blocks and the mass fractions (copolymerization ratios) of the monomers. As the Tg values of homopolymers, should be used the values listed in a known publication, either "Handbook of Pressure Sensitive Adhesive Technology" by Nikkan Kogyo Shimbun Ltd., or "Polymer Handbook" by Wiley-Interscience. For example, as the Tg values of homopolymers in the art disclosed herein, -70 °C is used for 2EHA, -54 °C for BA, and 105 °C for MMA.

In the acrylic block copolymer of the art disclosed herein, a monomer (the other monomer) besides the acrylic acid ester and the methacrylic acid ester may be copolymerized. Examples of the other monomer include, cyano-group-containing vinyl compounds such as acrylonitrile, methacrylonitrile, etc.; vinyl esters such as vinyl acetate, vinyl propionate, etc.; aromatic vinyl compounds such as styrene, α-methylstyrene, etc.; vinyl-group-containing heterocyclic compounds such as N-vinylpyrrolidone, etc.; amide-group-containing vinyl compounds such as acrylamide, methacrylamide, etc.; and so on. Other examples include acidic-group-containing monomers such as unsaturated monocarboxylic acids such as acrylic acid, methacrylic acid, etc.; unsaturated dicarboxylic acids such as maleic acid, fumaric acid, etc.; salts (sodium salts, potassium salts, etc.) of these monocarboxylic acids or dicarboxylic acids; unsaturated dicarboxylic acid anhydrides such as maleic acid anhydride, etc. Yet other examples include alkyl acrylates having a structure where a fluoroalkyl group is bonded to an acryloyl group such as methyl (trifluoromethyl)acrylate, ethyl 2-(trifluoromethyl)acrylate, ethyl 2-(perfluoroethyl)acrylate, methyl (diperfluoromethyl)acrylate, ethyl 2-(perfluorohexyl)acrylate, ethyl 2-(perfluorodecyl)acrylate, ethyl 2-(perfluorohexadecyl)acrylate, 2-(perfluorobutyl)ethyl 2-(perfluoroethyl)acrylate, 2-(Perfluoroethyl)methyl 2-(perfluoromethyl)acrylate, etc.; fluoroalkyl acrylates; and fluoroalkyl methacrylates.

The other monomer can be used for a purpose of, for instance, controlling the properties (adhesive properties, extrudability, etc.) of the PSA layer. A structural moiety arisen from such a monomer may be typically included in at least one block (which may be either an Ac block or an MAc block) constituting the acrylic block copolymer as a random copolymer, block copolymer, graft copolymer, etc. It is noted, however, that when the other monomer is used in too large an amount, the transparency of the PSA layer may be impaired, or the releasability of the RA layer and the RB layer may become insufficient. Usually, the other monomer is used in an amount corresponding to suitably 20 % by mass or smaller of all monomers constituting the acrylic block copolymer, preferably 10 % by mass or smaller, or more preferably 5 % by mass or smaller. In a preferable embodiment, the acrylic block copolymer is essentially free of the other monomers. In particular, the acidic-group-containing monomer is not substantially copolymerized in a preferable acrylic block copolymer. Such a PSA layer comprising an acrylic block copolymer as its base polymer is preferable because it may be naturally less corrosive to an adherend. For instance, in a PSA sheet for use involving adhesion to an adherend having a transparent electrode such as ITO (indium tin oxide), etc., it is especially meaningful that the PSA layer exhibits low corrosiveness to adherends. It is advantageous that the acidic-group-containing monomer is not substantially copolymerized in the acrylic block copolymer, also in order to avoid an excessive increase in the melt viscosity of the PSA layer.

Such an acrylic block copolymer can be readily synthesized by a known method (for example, see Patent Document 1, Patent Document 5), or a commercial product is readily available. Examples of the commercial product include, trade name "LA POLYMER" series (e.g., those with product numbers LA2140e, LA2250, etc.) available from Kraray Co., Ltd. As the method for synthesizing an acrylic block copolymer, living polymerization can be preferably employed. According to living polymerization, its own excellent structure control allows synthesis of an acrylic block copolymer having excellent thermoplasticity (e.g., good extrudability) while keeping the transparency and weatherability inherent in the acrylic polymer. Since it is able to control the molecular weight distribution in a narrow range, insufficiency in the cohesiveness due to the presence of low molecular weight components (e.g., migration of the adhesive to the release later) can be suppressed to achieve a PSA sheet having release layers with excellent releasability.

The PSA layer in the art disclosed herein can contain as necessary a component other than the acrylic block copolymer for a purpose of controlling the adhesive properties, etc. Such an optional component may be, for example, a polymer (which may be an oligomer having a relatively low polymerization degree (e.g., having a weight average molecular weight of at most 5000, typically 500 to 5000)) other than the acrylic block copolymer. Examples of such a polymer (which hereinafter may be referred to as an optional polymer) include acrylic polymers not having block structures such as homopolymers of acrylic monomers, random copolymers comprising as its primary monomer an acrylic monomer (which may be one, two or more kinds selected from the acrylic acid esters and methacrylic acid esters described earlier), etc.; olefinic resins; silicone-based polymers; and so on.

From the standpoint of the transparency of the PSA layer, when the optional polymer is contained in the PSA layer, a polymer having good miscibility to the acrylic block copolymer is preferably selected. An optional polymer is preferably added in an amount that does not greatly impair the transparency of the PSA layer. In usual, the amount of the optional polymer is added in an amount corresponding to suitably 50 parts by mass or smaller relative to 100 parts by mass of the acrylic block copolymer, preferably 10 parts by mass or smaller, or more preferably 5 parts by mass or smaller. In a preferable embodiment, the PSA layer is essentially free of polymers other than the acrylic block copolymer.

Tackifying resins are included in other examples of an optional component added to the PSA layer for a purpose of controlling the adhesive properties (e.g., increasing the adhesive strength), etc. The types of tackifying resins are not particularly limited and can be used, for example, one, two or more kinds suitably selected from tackifying resins generally used in PSA, including hydrocarbon-based tackifying resins, terpene-based tackifying resins, rosin-based tackifying resins, phenol-based tackifying resins, epoxy-based tackifying resins, polyamide-based tackifying resins, elastomer-based tackifying resins, ketone-based tackifying resins, and so on.

Hydrocarbon-based tackifying resins include various hydrocarbon-based resins such as aliphatic hydrocarbon resins, aromatic hydrocarbon resins (xylene resins, etc.), alicyclic hydrocarbon resins, aliphatic-aromatic petroleum resins (styrene-olefin-based copolymers, etc.), aliphatic-alicyclic petroleum resins, hydrogenated hydrocarbon resins, coumarone-based resins, coumarone-indene-based resins, and the like. Terpene-based tackifying resins include terpene-based resins such as α-pinene polymers, β-pinene polymers, etc.; modified terpene-based resins (e.g., terpene-phenol-based resins, styrene-modified terpene-based resins, hydrogenated terpene-based resins, etc.) obtained by subjecting these terpene-based resins to modification (phenol modification, aromatic modification, hydrogenation modification, etc.); and so on. Rosin-based tackifying resins include unmodified rosins (raw rosins) such as gum rosin, wood rosin, etc.; modified rosins (hydrogenated rosins, disproportioned rosins, polymerized rosins, other chemically modified rosins, etc.) obtained by subjecting these unmodified rosins to hydrogenation, disproportionation, polymerization, etc.; various other rosin derivatives; and so on. Examples of phenol-based tackifying resins include resol-type and novolac-type alkylphenols.

From the standpoint of the transparency of the PSA layer, when a tackifying resin as those listed above is contained in the PSA layer, a polymer having good miscibility to the acrylic block copolymer is preferably selected. A tackifying resin is preferably added in an amount that does not greatly impair the properties such as the transparency, weatherability and cohesiveness of the PSA layer as well as the releasablity of the release layers, etc. In usual, the tackifying resin is added in an amount corresponding to suitably 100 parts by mass or smaller relative to 100 parts by mass of the acrylic block copolymer, preferably 80 parts by mass or smaller, or more preferably 60 parts by mass or smaller. The PSA sheet disclosed herein may be preferably made in an embodiment where the PSA layer is essentially free of tackifying resins.

The PSA layer in the art disclosed herein may contain, as necessary, additives including fillers such as calcium oxide, magnesium oxide, silica, zinc oxide, titanium oxide, etc.; coloring agents such as dyes, pigments, etc.; weathering stabilizers such as light stabilizers (e.g., hindered amine-based light stabilizers), ultraviolet light absorbers, antioxidants, etc.; and polyethylene imine. For example, the PSA layer may be constituted to contain a crosslinking agent that is set to undergo a crosslinking reaction by ultraviolet light so that after a PSA sheet is formed by co-extruding the PSA layer along with release layers, irradiation of a suitable amount of ultraviolet light to the PSA sheet induces the crosslinking reaction in the PSA layer, thereby allowing control of the adhesive properties. As the crosslinking agent, other than these ultraviolet light curable kinds, can be used a crosslinking agent that is set to undergo a crosslinking reaction by visible light or electron beam. When the PSA layer is crosslinked by using such a crosslinking agent, it is desirable that the PSA layer contains no light-blocking materials such as fillers, pigments, etc., or the amounts of these materials are suppressed at low levels (e.g., 5 % by mass or smaller of the total mass of the PSA layer, preferably 1 % by mass or smaller). This is also beneficial in view of taking advantage of the transparency of the acrylic block copolymer. From the standpoint of the fluidity during extrusion, it is preferable that the acrylic block copolymer contained in the PSA layer stays substantially uncrosslinked at least prior to the extrusion of a PSA sheet.

The RA layer and the RB layer in the art disclosed herein are layers (release layers) that are laminated respectively on the first face and the second face of the PSA layer and are releasable from the PSA layer. These release layers are typically non-adhesive at 23 °C. It is preferable that the release layers can function as release liners for the PSA layer. For instance, it is preferable that the release layers can undergo interfacial peeling at the interfaces with the PSA layer. It is also preferable that they can be peeled off continuously from the PSA layer without splitting or tearing along the way.

Both the release layers preferably exhibit peel strengths of 5.0 N/20mm or smaller when the RA layer is peeled off from the PSA layer and when the RB layer is peeled off from the PSA layer at a measurement temperature of 23 °C, a tensile speed of 10 m/min, and a peel angle of 180°. When the peel strength is 5.0 N/20mm or smaller, the initial peeling of the release layer (operation of separating the PSA layer surface and the release layer surface at a part of a PSA sheet to initiate peeling of the release layer) is easy and the subsequent peeling can be smoothly carried out; and therefore, it provides excellent adhesion handling. At least one (preferably only one) of the RA layer and the RB layer more preferably exhibits a peel strength of 2.0 N/20mm or smaller (e.g., 1.0 N/20mm or smaller). Since the ease of handling of a PSA sheet may be reduced also when the peel strength of a release layer is too small, it is usually preferable that the peel strengths are about 0.01 N/20mm or greater. Specific operations in measurement of the peel strength can be carried out, for example, based on the contents of Examples described later.

In a preferable embodiment, at least the PSA-layer-side surfaces (i.e., the release faces) of the release layers (the RA layer and the RB layer) are constituted with release-face-forming compositions, with each comprising a polyolefin as its primary component. A release layer of such a constitution is preferable because it is likely to exhibit excellent releasability from the PSA layer. The polyolefin may be, for instance, a homopolymer of an α-olefin, a copolymer of two or more kinds of α-olelin, a copolymer of one, two or more kinds of α-olefin and another vinyl monomer, and so on. An α-olefin with 2 to 12 carbon atoms can be preferably used. Examples of the polyolefin include polyethylenes (PE), polypropylenes (PP), poly-1-butenes, ethylene-propylene copolymers, ethylene-1-butene copolymers, propylene-1-butene copolymers, ethylene-propylene-1-butene copolymers, copolymers of ethylene and/or propylene as well as an α-olefin having 5 to 12 carbon atoms, ethylene-unconjugated-diene copolymers, propylene-unconjugated-diene copolymers, 1-butene-unconjugated-diene copolymers, ethylene-1-butene-unconjugated-diene copolymers, and so on. The composition may contain solely one kind of these polyolefins, or two or more kinds in combination.

Preferred examples of the release-face-forming composition include a composition (PE composition) wherein the primary monomer of the polyolefin is ethylene and a composition (PP composition) wherein the primary monomer is propylene. The PE composition may be a homopolymer of ethylene, or a copolymer of ethylene as the primary monomer and another α-olefin (e.g., an α-olefin having 3 to 12 carbon atoms). Preferred examples of the α-olefin include propylene, 1-butene, 1-hexene, 4-methyl-1-pentene, 1-octene, and the like. As the PE composition, can be used any of low density polyethylenes (LDPE), linear low density polyethylenes (LLDPE) and high density polyethylenes (HDPE). The PP composition may be a homopolymer of propylene (i.e., a homopolypropylene), or a copolymer of propylene as the primary monomer and another α-olefin (e.g., an α-olefin having 2 or 4 to 12 carbon atoms). As the homopolypropylene, can be used any of isotactic polypropylenes, sindiotactic polypropylenes and atactic polypropylenes.

In a preferable embodiment, at least the PSA-layer-side surfaces of the release layers are constituted with PE compositions. For example, can be preferably used an LDPE and/or an LLDPE. From the standpoint of being able to form release layers having greater releasability, an LLDPE is especially preferable.

Each of the RA layer and the RB layer may have a single-layered structure or a multi-layered structure with two or more layers (typically, 2 to 5 layers, e.g., 2 to 3 layers). The constitutions (numbers of layers, thicknesses, etc.) and/or the compositions of the RA layer and the RB layer may be the same with or different from each other. A single-layered release layer is advantageous in that co-extrusion of a PSA sheet is facile. In such a single-layered release layer, it is preferable that its entirety is formed with a release-face-forming composition comprising a polyolefin as its primary component as described above. A release layer having such a composition is advantageous also in terms of stability of film formation during extrusion and ease of disposal (e.g., incineration) of the release layer separated from the PSA layer (i.e., after use).

When a release layer constituting the PSA sheet disclosed herein is multi-layered, of the layers (sublayers), the layer closest to the PSA layer is preferably formed of a release-face-forming composition comprising the polyolefin as its primary component. The other layers may be of any compositions as long as they allow extrusion of the PSA sheet disclosed herein, and various conventional thermoplastic resin compositions can be used without particular limitations. Such a multi-layered release layer can combine, for instance, excellent releasability from a PSA layer and good printability on the back face at high levels, by selecting, for the layer constituting the back face (the face opposite to the release face; i.e., the face that forms an exposed surface of the PSA sheet) of the release layer, a layer formed of a composition that provides good printability.

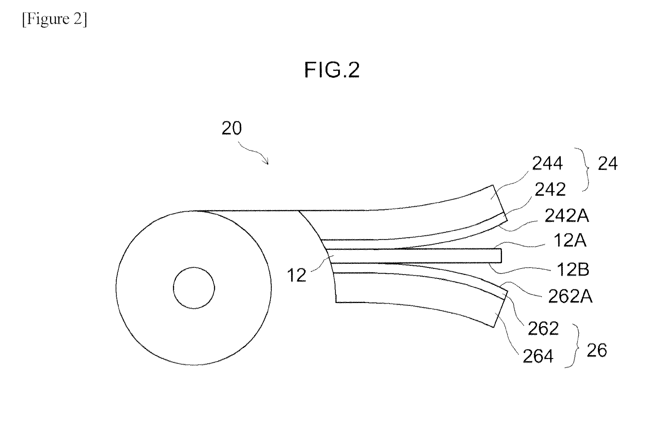

Figure 2 schematically shows an example of constitutions of the PSA sheet comprising a multi-layered release layer. In this PSA sheet 20, both the RA layer 24 and the RB layer 26 have multi-layered structures. The RA layer 24 and the RB layer 26 comprise layers (front face layers) 242 and 262 on the sides facing the PSA layer 12, and back side layers (back face layers) 244 and 264, respectively. The RA layer 24 and the RB layer 26 are releasable by interfacial peeling from the first face 12A and the second face 12B, respectively, of the PSA layer 12. In other words, PSA-layer-side surfaces (release faces) 242A and 262A of the front face layers 242 and 262 exhibit releasability relative to the PSA layer 12. On the other hand, the front face layer 242 and the back face layer 244, and the front face layer 262 and the back face layer 264 are in typical both interfacially non-releasable.

For a purpose of preventing deterioration, the release layers may contain, for example, weathering stabilizers such as light stabilizers (e.g., hindered amine-based light stabilizers), ultraviolet light absorbers, antioxidants, etc.; fillers such as calcium oxide, magnesium oxide, silica, zinc oxide, titanium oxide, etc.; coloring agents such as dyes, pigments, etc.; and so on as necessary. Examples of other additives that can be contained in the release layers as necessary include anti-gumming agents, lubricants, anti-blocking agents, foaming agents, polyethyleneimine, and so on. The PSA sheet disclosed herein can be preferably made in an embodiment where a low molecular weight compound (e.g., aliphatic acid amide, etc.) that bleeds to the release layer surface to provide better release has not been specifically added to the release layers constituting the PSA sheet. In other words, even in such an embodiment, the release layers can be adequately peeled off from the adhesive surfaces.

In the PSA sheet disclosed herein, the thickness of the PSA layer is not particularly limited and can be suitably selected according to the adhesive strength, etc., desired in the PSA layer. When the thickness of the PSA layer is too small, a desired adhesive strength may be less likely to be obtained or it may be difficult to extrude the PSA layer to have a uniform thickness. When the thickness of the PSA layer is too large, the transparency of the PSA layer may be impaired, or the releasability of a release layer may descend. In usual, the thickness of the PSA layer is suitably about 2 µm to 200 µm, preferably 3 µm to 150 µm, or more preferably 4 µm to 100 µm (e.g., 5 µm to 50 µm).

The PSA layer may have a single-layered structure or a multi-layered structure with two or more layers (typically, 2 to 5 layers, e.g., 2 to 3 layers). A single-layered PSA layer is advantageous in that co-extrusion of a PSA sheet is facile. When it is multi-layered, each layer preferably has a thickness of 2 µm or greater (preferably 3 µm or greater, more preferably 5 µm or greater). For example, the PSA layer may have a multi-layered (e.g., a double-layered) structure with the RA-layer-side surface and the RB-layer-side surface having different compositions. A PSA layer having such a constitution can be preferably used when there should be a difference between the peel strength of the RA layer and the peel strength of the RB.

In the PSA sheet disclosed herein, the thicknesses of the release layers (the RA layer and the RB layer) are not particularly limited and can be suitably selected in accordance with the embodiments of the PSA sheet manufacturing, the use, and so on. For example, when the manufactured PSA sheet is stored and transported in a roll (in a form of a PSA sheet roll), a certain level of flexibility is required in the PSA sheet and thus the thickness of each release layer is suitably about 500 µm or smaller, preferably 200 µm or smaller, or more preferably 150 µm or smaller. From the standpoint of handlings (e.g., handling of the PSA sheet, workability when peeling release layers from the PSA layer), each release layer has a thickness of suitably 5 µm or greater, preferably 10 µm or greater, or more preferably 15 µm or greater (e.g., 20 µm or greater).

The PSA sheet disclosed herein can be obtained by co-extruding a PSA layer and release layers to form a sheet (form a film), using a PSA-layer-forming composition and release-layer-forming compositions (an RA-layer-forming composition and an RB-layer-forming composition) corresponding to the compositions of the PSA layer and the release layers. The co-extrusion can be carried out according to an inflation method, a T-die method, etc., generally used in manufacturing various multi-layered films.

As necessary, the PSA sheet can be uni-axially stretched lengthwise (in the extruding direction) or widthwise (in the direction perpendicular to the extruding direction), or bi-axially stretched lengthwise and widthwise. The lengthwise stretch ratio can be, for example, 1.01 to 10 (preferably 1.01 to 5, more preferably 1.01 to 3). The widthwise stretch ratio can be, for example, 1.01 to 8 (preferably 1.01 to 4, more preferably 1.01 to 2.5). The stretching can be performed in one step per axis, or in two or more steps in accordance with the intended use of the PSA sheet. For example, the stretch ratio of a first step can be 1.01 to 4 and the stretch ratio of a second step can be 1.01 to 2.5. The temperature at which stretching is performed is not particularly limited. From the standpoint of the stretching ability, etc., relative to the glass transition temperature (Tg) of the polymer constituting a release layer, stretching can be performed at a temperature of about (Tg - 20) °C to (Tg + 50) °C.

In another preferable embodiment of the PSA sheet disclosed herein, the PSA layer exhibits an adhesive strength relative to a SUS plate of 1.0 N/20mm or greater at a measurement temperature of 23 °C, a tensile speed of 300 mm/min, and a peel angle of 180°. The adhesive strength may be 2.0 N/20mm or greater (or even 2.5 N/20mm or greater). This adhesive strength preferably has a value greater than at least one of the peel strength values of the RA layer and the RB layer measured when they are peeled off from the PSA layer, or more preferably has a value greater than either of them. The upper limit of the adhesive strength is not particularly limited, and in usual, the adhesive strength is suitably 50.0 N/20mm or smaller. The adhesive strength can be measured in accordance with the procedures for measuring adhesive strength in Examples described later with reference to JIS Z 0237(2000).

Because the PSA sheet disclosed herein comprises an adhesively double-faced PSA layer comprising as its base polymer an acrylic polymer with excellent transparency and also has a constitution suitable for keeping the adhesive surfaces of the PSA layer clean until use (until adhesion), it can be preferably used for a purpose of adhering parts, with at least one part being light-transmitting (in other words, for a purpose where the outer appearance of the PSA layer may be visually observed). For example, it is preferred as a PSA sheet used for adhering optical parts used as constituents of a liquid crystal display panel, a plasma display panel (PDP), an organic electroluminescence (EL) display, and so forth. Especially, it is useful as a PSA sheet applied to optical parts such as polarizing plates (polarizing films), wave plates, retardation plates, optical compensation films, brightening films, light-diffusing sheets, reflective sheets, and so on, which are used in liquid crystal display panels.

Several embodiments relevant to the present invention are described below although this is not to limit the present invention to these embodiments. In the following explanation, the terms "parts" and "%" are based on the mass unless specifically stated otherwise.

The Mw's in the explanation below refer to the values determined by carrying out GPC under the following conditions:
GPC measurement conditions
   - measurement device: model number "HLC-8120GPC", TOSOH Corporation
   - columns: were used linearly connected TSKgel SuperHZM-H/HZ4000/HZ3000/HZ2000 from TOSOH Corporation.
   - column size: 6.0 mm inner diameter by 15.0 cm long, each
   - column temperature: 40 °C
   - flow rate : 0.6 mL/min
   - eluent: tetrahydrofuran
   - injection volume of sample: 20 µL
   - detector: RI (differential refractometer)
   - standard sample: polystyrene

### <Synthesis of acrylic block copolymer Ac1>

A reaction vessel of volume 2 L equipped with a nitrogen inlet, a thermometer and a stirrer was purged with nitrogen gas. To this, were added 800 mL of toluene, 2.5 mL of N,N,N',N",N"-pentamethyl diethylenetriamine, 34 mL of a 0.6 mol/L toluene solution of isobutylbis(2,6-di-t-butyl-4-methylphenoxy)aluminum, and 3.5 mL of a 1,3 mol/L toluene solution of sec-butyl lithium. To this, was added 32 mL of methyl methacrylate (MMA) and the reaction was carried out at room temperature for 3 hours. The reaction mixture was then cooled to -15 °C. To this, was added dropwise 150 mL of n-butyl acrylate (BA) over 7 hours. Subsequently, was added 32 mL of MMA, and the resulting reaction mixture was brought back to room temperature and let stirred for about 10 hours. This reaction mixture was poured into a large amount of methanol and the appeared precipitates were collected to obtain an acrylic block copolymer having a triblock structure of polyMMA-polyBA-polyMMA. The resulting copolymer had a Mw of about 8.0 × 10⁴ and the mass ratio of the polyMMA block (the total mass of the two blocks) to the polyBA block was about 30/70. Hereinafter, this copolymer is referred to as "Acl".

### <Synthesis of acrylic block copolymer Ac2>

A reaction vessel of volume 2 L equipped with a nitrogen inlet, a thermometer and a stirrer was purged with nitrogen gas. To this, were added 800 mL oftoluene, 2.2 mL of N,N,N',N",N"-pentamethyl diethylenetriamine, 32 mL of a 0.6 mol/L toluene solution of isobutylbis(2,6-di-t-butyl-4-methylphenoxy)aluminum, and 2.2 mL of a 1.3 mol/L toluene solution of sec-butyl lithium. To this, was added 32 mL of MMA and the reaction was carried out at room temperature for 3 hours. The reaction mixture was then cooled to -30 °C. To this, was added dropwise 210 mL of 2EHA over 7 hours. Subsequently, was added 32 mL of MMA, and the resulting reaction mixture was brought back to room temperature and let stirred for about 10 hours. This reaction mixture was poured into a large amount of methanol and the appeared precipitates were collected to obtain an acrylic block copolymer having a triblock structure of polyMMA-poly2EHA-polyMMA. The resulting copolymer had a Mw of about 8.5 × 10⁴ and the mass ratio of the polyMMA block (the total mass of the two blocks) to the poly2EHA block was about 30/70. Hereinafter, this copolymer is referred to as "Ac2".

### <Example 1>

To an extruder, were added a low density polyethylene (LDPE) (trade name "PETROTHENE 190" available from TOSOH Corporation) as a composition for forming an RA layer (a first release layer), an acrylic block copolymer (trade name "LA POLYMER LA2140e" available from Kraray Co., Ltd., with Mw of about 8.0 × 10⁴; hereinafter, this copolymer is referred to as "Ac3 ") as a composition for forming a PSA layer, and a LDPE (PETROTHENE 190) as a composition for forming an RB layer (a second release layer); and they were melt extruded from the T-die to form a sheet having an RA layer (50 µm thick), a PSA layer (10 µm thick) and an RB layer (50 µm thick) overlaid in this order. This tri-layered sheet was wound up into a roll with the RA layer facing outward, and was obtained a PSA sheet (Sample 1) having a first and a second release layers on, respectively, a first face and a second face of the PSA layer.

### <Examples 2>

A PSA sheet (Sample 2) was prepared in the same way as Example 1 except that the thicknesses of the RA layer, the PSA layer and the RB layer were 100 µm, 20µm and 100µm, respectively.

### <Example 3>

As the RA-layer-forming composition and the RB-layer-forming composition, was used a linear low density polyethylene (LLDPE) (trade name "SUMIKATHENE E FV401" available from Sumitomo Chemical Co., Ltd). Otherwise, a PSA sheet (Sample 3) was prepared in the same way as Example 1.

### <Example 4>

As the RA-layer-forming composition, was used an LLDPE (SUMMIKATHENE E FV401), and as the R_{B}-layer-forming composition, was used a LDPE (PETROTHENE 190). Otherwise, a PSA sheet (Sample 4) was prepared in the same way as Example 1.

### <Example 5>

As the RA-layer-forming composition and the RB-layer-forming composition, was used a homopolypropylene (PP) (trade name "NOVATEC PP FL6H" available from Japan Polypropylene Corporation). Otherwise, a PSA sheet (Sample 5) was prepared in the same way as Example 1.

### <Example 6>

In this example, as the PSA-layer-forming composition, was used Ac1 (an acrylic block copolymer having a triblock structure of polyMMA-polyBA-polyMMA). Otherwise, a PSA sheet (Sample 6) was prepared in the same way as Example 1.

### <Example 7>

In this example, as the PSA-layer-forming composition, was used Ac2 (an acrylic block copolymer having a triblock structure of polyMMA-poly2HEA-polyMMA). Otherwise, a PSA sheet (Sample 7) was prepared in the same way as Example 1.

### <Example 8>

As the RB-layer-forming composition, was used a polyethylene terephthalate (PET) (trade name "UNIPET RT543" available from Nippon Unipet Corporation), and as the RA-layer-forming composition, was used a LDPE (PETROTHENE 190). Otherwise, a PSA sheet (Sample 8) was prepared in the same way as Example 1.

### <Examples 9>

In this example, as the R_{A}-layer-forming composition and the RB-layer-forming composition, was used a PET (UNIPET RT543). Otherwise, a PSA sheet (Sample 9) was prepared in the same way as Example 1.

### <Example 10>

As the PSA-layer-forming composition, was used an ethylene-vinyl acetate copolymer (EVA) (trade name "ULTRATHENE 633" available from TOSOH Corporation). Otherwise, a PSA sheet (Sample 10) was prepared in the same way as Example 1.

### <Example 11>

As the PSA-layer-forming composition, was used a styrene-ethylene-butylene-styrene copolymer (SEBS) (trade name "TUFTEC H1221" available from Asahi Kasei Corporation). Otherwise, a PSA sheet (Sample 11) was prepared in the same way as Example 1.

With respect to Samples 1 to 11 prepared above, the following evaluations were carried out at a temperature of 23 °C and a relative humidity of 50 %.

### <Evaluation of releasability>

A 100 mm long, 20 mm wide strip was cut out from each Sample as a test piece. At a corner of the test piece, to the front and back faces of the test piece, was adhered a commercial PSA tape (e.g., trade name "DANPRON TAPE NO. 375" available from Nitto Denko Corporation). Subsequently, they were separated to peel off the RA layer from the PSA layer up to the 30 mm line of the length from one end of the test piece. The partially peeled RA layer of the test piece and the remaining layers (the PSA layer and the RB layer) were held respectively with chucks of a tensile tester and peeled at a tensile speed of 10 m/min into the 180° direction to measure the peel strength required for the peeling (the peel strength of the RA layer when peeled from the PSA layer). At the same time, if the RA layer was peeled off at the interface with the PSA layer, the RA-releasability was rated "good". Upon the separation of the PSA tape described above, when the RA layer could not be peeled off from the PSA layer, the RA-layer-releasability was rated "poor".
Further, with respect to each test piece after the measurement of the liner's peel strength, to the first face (first adhesive surface) of the PSA layer exposed by removal of the RA layer, a 25 µm thick PET film was adhered for backing. The PSA tape adhered to the RB layer of the test piece was then pulled at one end of the test piece to peel off the RB layer from the PSA layer adhered to the PET film. The peeled portion of the RB layer was held with a hand and further peeled into the 180° direction at a tensile speed of about 10 m/min. At this time, when the RB layer was peeled off at the interface with the PSA layer, the RB-releasability was rated "good". Upon the separation of` the PSA tape adhered on the RB layer above, when the RB layer could not be peeled off from the PSA layer, the RB-layer-releasability was rated "spoor".

### <Measurement of adhesive strength>

A 100 mm long, 20 mm wide strip was cut out from each Sample as a test piece. At a corner of the test piece, to the front and back faces of the test piece, was adhered a commercial PSA tape. Subsequently, they were separated to peel off the RA layer from the PSA layer, and to the exposed first face of the PSA layer, a 25 µm thick PET film was adhered for backing.
The adhesive strength was measured in accordance with JIS Z 0237(2000). In particular, a SUS430BA plate was used as the adherend and its surface was washed with toluene. The PSA tape adhered to the RB layer of the test piece was pulled to peel off the RB layer from the PSA layer. The exposed second face (second adhesive surface) of the PSA layer was pressure-bonded to the adherend with a 2 kg roller moved back and forth once. After 30 minutes from the pressure-bonding, the test piece was peeled into the 180° direction at a tensile speed of 300 mm/min to measure the adhesive strength. It is noted that with respect to Examples 9 to 11, since their RA layers could not be peeled off from their PSA layers, their adhesive strengths could not be measured.

**[Table 1]**

| Sample | | 1 | 2 | 3 | 4 | 5 | 6 | 7 |
|---|---|---|---|---|---|---|---|---|
| RA layer | Composition Thickness (µm) | LDPE 50 | LDPE 100 | LLDPE 50 | LLDPE 50 | PP 50 | LDPE 50 | LDPE 50 |
| PSA layer | Composition Thickness (µm) | Ac3 10 | Ac3 20 | Ac3 10 | Ac3 10 | Ac3 10 | Ac1 10 | Ac2 10 |
| RB layer | Composition Thickness (µm) | LDPE 50 | LDPE 100 | LLDPE 50 | LDPE 50 | PP 50 | LDPE 50 | LDPE 50 |
| RA layer peel strength (N/20mm) | | 0.5 | 0.6 | 0.3 | 0.3 | 0.6 | 0.5 | 0.5 |
| RA layer releasability | | Good | Good | Good | Good | Good | Good | Good |
| RB layer releasability | | Good | Good | Good | Good | Good | Good | Good |
| Adhesive strength (N/20mm) | | 2.7 | 3.7 | 2.6 | 2.8 | 2.6 | 1.2 | 3.1 |

**[Table 2]**

| Sample | | 8 | 9 | 10 | 11 |
|---|---|---|---|---|---|
| RA layer | Composition Thickness (µm) | LDPE 50 | PET 50 | LDPE 50 | LDPE 50 |
| PSA layer | Composition Thickness (µm) | Ac3 10 | Ac3 10 | EVA 10 | SEBS 10 |
| RB layer | Composition Thickness (µm) | PET 50 | PET 50 | LDPE 50 | LDPE 50 |
| RA layer peel strength (N/20mm) | | 0.5 | - | - | - |
| RA layer releasability | | Good | Poor | Poor | Poor |
| RB layer releasability | | Poor | Poor | Poor | Poor |
| Adhesive strength (N/20mm) | | 2.7 | - | - | - |

As shown in these Tables, Samples 1 to 7; where had been used an acrylic block copolymer as the PSA-layer-forming composition, a polyolefin (more particularly, a polyethylene or a polypropylene) as each of the RA-layer-forming and RB-layer-forming compositions; all exhibited peel strength values of 1.0 N/20mm or smaller (more specifically, 0.6 N/20mm or smaller) as well as good releasability. Samples 1 to 7 all exhibited adhesive strength values of 1.0 N/20mm or greater relative to the SUS plate. All of these Samples also exhibited adhesive strength values of 1.0 N/20mm or greater (more specifically 1.2 N/20mm or greater) relative to the SUS plate. Samples where Ac2 or Ac3 had been used as the acrylic block copolymers produced adhesive strength values of 2.5 N/20mm or greater. As compared to Sample 5 where polypropylenes had been used as the RA-layer-forming and RB-layer-forming compositions, Samples where polyethylenes (especially LLDPE) had been used achieved higher releasability (lower peel strengths) despite that their release layers had similar thicknesses. For example, Samples 3 and 4 where LLDPE was used as the RA-layer-foming composition were able to combine adhesive strengths of 2.5 N/20mm or greater as well as peel strengths of 0.4 N/20mm or smaller, respectively.

On the contrary, with Samples 8 and 9 constructed by co-extruding, respectively, PSA layers formed of acrylic block copolymers and RA layers and/or RB layers formed of PET, the layers formed of PET could not be adequately peeled off from the PSA layer. Also with Samples 10 and 11 prepared by changing the materials constituting the PSA layers from acrylic block copolymers to EVA or SEBS and co-extruding the PSA layers with RA layers and RB layers that are formed of LDPE, neither the RA layers nor the RB layers could be adequately peeled off from the PSA layers.

Although specific embodiments of the present invention have been described in detail above, these are merely for illustrations and do not limit the scope of the claims. The art according to the claims includes various modifications and changes of the specific embodiments illustrated above.

## Claims

1. A pressure-sensitive adhesive sheet comprising
a pressure-sensitive adhesive layer comprising an acrylic block copolymer as its base polymer,
an RA layer that is laminated on a first face of the pressure-sensitive adhesive layer and is releasable from the pressure-sensitive adhesive layer, and
an RB layer that is laminated on a second face of the pressure-sensitive adhesive layer and is releasable from the pressure-sensitive adhesive layer,
with these layers having been co-extruded.

2. The pressure-sensitive adhesive sheet according to Claim 1, wherein the acrylic block copolymer comprises at least one acrylate block and at least one methacrylate block.

3. The pressure-sensitive adhesive sheet according to Claim 1 or 2, wherein the acrylic block copolymer has a weight average molecular weight (Mw) of 3 × 10⁴ to 30 × 10⁴.

4. The pressure-sensitive adhesive sheet according to any one of Claims 1 to 3, wherein the pressure-sensitive adhesive layer has a thickness of 2 µm to 200 µm.

5. The pressure-sensitive adhesive sheet according to any one of Claims 1 to 4, wherein each of the RA layer and the RB layer comprises, at least on the side facing the PSA layer, a surface constituted with a release-face-forming composition comprising a polyolefin as its primary component.

6. The pressure-sensitive adhesive sheet according to any one of Claims 1 to 5, wherein each of the RA layer and the RB layer has a thickness of 10 µm to 500 µm.

7. The pressure-sensitive adhesive sheet according to any one of Claims 1 to 6, wherein both the RA layer and the RB layer exhibit peel strength values of 5.0 N/20mm or smaller when the RA layer is peeled off and when the RB layer is peeled off from the pressure-sensitive adhesive layer at a measurement temperature of 23 °C, a tensile speed of 10 m/min and a peel angle of 180°.

8. The pressure-sensitive adhesive sheet according to any one of Claims 1 to 7, wherein the pressure-sensitive adhesive layer exhibits an adhesive strength relative to a SUS plate of 1.0 N/20mm or greater at a measurement temperature of 23 °C, a tensile speed of 300 mm/min and a peel angle of 180°.

9. The pressure-sensitive adhesive sheet according to any one of Claims 1 to 8, that is used for adhering optical parts together.
